# EUROPEAN PATENT SPECIFICATION

(11) **EP 2 455 216 B1**
(45) Date of publication and mention of the grant of the patent: **06.04.2016**
(21) Application number: 10799891.6
(22) Date of filing: 15.07.2010
(51) Int. Cl.: B29D 30/38

(54) **DEVICE AND METHOD FOR MANUFACTURING A CONSTITUENT MEMBER OF A TIRE**
VORRICHTUNG UND VERFAHREN ZUR HERSTELLUNG EINES REIFENBESTANDTEILS
DISPOSITIF ET PROCÉDÉ DE FABRICATION D'UN COMPOSANT D'UN PNEUMATIQUE

(30) Priority: 15.07.2009 JP 2009166772
(43) Date of publication of application: 23.05.2012
(73) Proprietor: Bridgestone Corporation, Tokyo 104-8340 (JP)
(72) Inventor: IWASAKI, Yoshikazu, Kodaira-shi Tokyo 187-8531 (JP); KUROKI, Yuuzo, Kodaira-shi Tokyo 187-8531 (JP)
(74) Representative: Oxley, Robin John George
(86) International application number: PCT/JP2010/061984
(87) International publication number: WO 2011/007833

(56) References cited:
- EP-A1- 1 541 326
- WO-A1-03/106152
- JP-A- 2001 322 403
- JP-A- 2003 291 225
- JP-A- 2004 058 345
- JP-T- 2009 502 587
- US-A1- 2003 051 794
- US-A1- 2003 168 152
- US-A1- 2007 023 952
- DATABASE WPI Week 200039 Thomson Scientific, London, GB; AN 2000-446784 XP002712889, -& JP 2000 159399 A (BRIDGESTONE CORP) 13 June 2000 (2000-06-13)

## Description

### Technical Field

The present invention relates to a device and a method for manufacturing a constituent member of a tire in which a sheet-shaped tire constituent member is manufactured by arranging and joining a plurality of strip-shaped members on a rotatable drum.

### Background Art

In a manufacturing process of an unvulcanized tire, side portions of a plurality of sheet-shaped rubber members formed of unvulcanized rubber or the like are sequentially joined to manufacture a tire constituent member such as an inner liner, a carcass ply and the like. In addition, as a device for manufacturing such a tire constituent member, a device has been known in which a plurality of band-shaped (strip-shaped) members cut off to a certain length are sequentially arranged on a peripheral surface of a drum and joined together by abutting side portions of the members (See Patent Document 1).

In this prior-art device, the side portions of the strip-shaped members are abutted and joined together without overlapping, and thus the occurrence of a step in the side portions is prevented. However, this device has a problem in which the structure is complicated. In addition, since the opposing side faces of a strip-shaped member are abutted and joined together in this device, the joint area of the side portions is small. Therefore, there is room for improvement in this device from the viewpoint of joint strength of the strip-shaped member.

In contrast, a method of manufacturing a constituent member of a tire is known in which the joint area of the side portions is increased by providing a rubber portion having a small thickness on a side portion of one of the members and by overlapping the side portion with this rubber portion and joining them (See Patent Document 2).

In this prior-art manufacturing method, by the increase in the joint area of the side portions of the members, the joint strength of the side portions is improved. However, it is difficult to continuously and automatically join the side portions of the strip-shaped members with accuracy. Therefore, a proposal of a specific device or method which solves problems at the time of manufacturing and stably manufactures a constituent member of a tire with high joint accuracy is in demand.

### Citation List

### Patent Document

Patent document 1: Japanese Patent Laid-Open No. 4-226742
Patent Document 2: Japanese Patent Laid-Open No. 5-269887

JP 2000 159399 discloses a method of joining a strip member in which edges of adjacent strip members are overlapped for joining. These strip members are placed on a conveyor and the amount of movement of the conveyor is controlled to adjust overlap between adjacent strip members.

### Summary of the Invention

### Problems to be Solved by the Invention

The present invention has been made in view of the above-described prior-art problems and an object of the present invention is to stably manufacture a reliably joined constituent member of a tire in which side portions of a plurality of strip-shaped members arranged on a drum are positioned accurately with respect to each other and joined with accuracy while sufficient joint strength is assured.

### Means for Solving the Problems

The present invention relates to a manufacturing device as defined in claim 1, the device being provided with a drum on which a plurality of strip-shaped members are sequentially arranged in a peripheral direction by being rotated each time the strip-shaped member is arranged and manufacturing a constituent member of a tire by joining side portions of the strip-shaped members adjacent in the drum peripheral direction, characterized by including supply means which supplies the strip-shaped member in which a joint portion having a relatively small thickness is provided on one side portion to a drum, arranging means which sequentially arranges the plurality of strip-shaped members on a drum by overlapping the joint portion on one of the side portions with the other side portion, measuring means which measures a width between the both side portions of each strip-shaped member, and rotation control means which rotates the drum based on a measurement result of the width by the measuring means and positions the side portions to be arranged by overlapping by the arranging means. The device moreover comprises a joining means which joins the side portions of the strip-shaped members that are arranged on a drum. The joining means has a frame extending along the side portions of the strip-shaped members and abutting means on a lower face of the frame. The abutting means abut the overlapped side portions.

In addition, the present invention relates to a manufacturing method as defined in claim 5, of manufacturing a constituent member of a tire by sequentially arranging the plurality of strip-shaped members in the drum peripheral direction by rotating the drum each time the strip-shaped member is arranged and by joining the side portions of the adjacent strip-shaped members, characterized by including a supply step of supplying the strip-shaped member in which the joint portion having a relatively small thickness is provided on one of the side portions to the drum, an arrangement step of sequentially arranging the plurality of strip-shaped members on the drum, by overlapping the joint portion on one of the side portions with the other side portion, a measurement step of measuring the width between the both side portions of the strip-shaped member, and a positioning step of rotating the drum based on a measurement result of the width in the measurement step, to position the side portions to be arranged by being overlapped in the arrangement step. The method moreover comprises a step of joining the side portions of the strip-shaped members that are arranged on the drum. The joining step includes a step of abutting overlapped side portions by abutting means provided on a lower face of the frame of joining means. The frame extends along the side portions of the strip-shaped members. Preferred embodiments of the invention are defined in the dependent claims.

### Advantages of the Invention

According to the present invention, the side portions of the plurality of strip-shaped members to be arranged on the drum can be positioned accurately with respect to each other and joined with accuracy while sufficient joint strength is assured and a reliably joined constituent member of a tire can be stably manufactured.

### Brief Description of the Drawings

[Fig. 1] Fig. 1 is a perspective view of an essential part schematically illustrating an outline configuration of a device for manufacturing a constituent member of a tire of an embodiment.
[Fig. 2] Fig. 2 is a sectional view illustrating a strip-shaped member of this embodiment, cut away in the width direction.
[Fig. 3] Fig. 3 is a side view of an essential part schematically illustrating arranging means for the strip-shaped member.
[Fig. 4] Fig. 4 is a side view of an essential part illustrating a procedure of arranging the strip-shaped member by the arranging means in Fig. 3.
[Fig. 5] Fig. 5 is a front view schematically illustrating measuring means in Fig. 3.
[Fig. 6] Fig. 6 is a front view schematically illustrating an essential part of joining means of the strip-shaped member.
[Fig. 7] Fig. 7A is an enlarged view of abutting means in Fig. 6 and Fig. 7B is a bottom view.
[Fig. 8] Fig. 8 is an enlarged view illustrating a state in which the abutting means in Fig. 6 is pressed onto the strip-shaped member.
[Fig. 9] Fig. 9 is a side view of an essential part schematically illustrating a transfer process of a constituent member of a tire.

### Description of Embodiment

An embodiment of a device and a method for manufacturing a constituent member of a tire of the present invention will be described below by referring to the attached drawings.

The device for manufacturing a constituent member of a tire of this embodiment (hereinafter referred to as the manufacturing device) arranges a plurality of strip-shaped members which are sheet members, on a drum and joins side portions of the strip-shaped members adjacent in the drum peripheral direction to each other. Furthermore, the manufacturing device manufactures the sheet-shaped tire constituent member constituting each part of a tire by joining side portions of the plurality of strip-shaped members. At that time, the manufacturing device manufactures a carcass ply by joining a plurality of the strip-shaped members, each obtained by coating a plurality of juxtaposed cords by rubber, for example (rubber coated cord), or manufactures a rubber sheet by joining a plurality of strip-shaped rubber members not having a cord. Hereinafter, an example in which a carcass ply having a length of one circle of a tire is manufactured as a tire constituent member will be described.

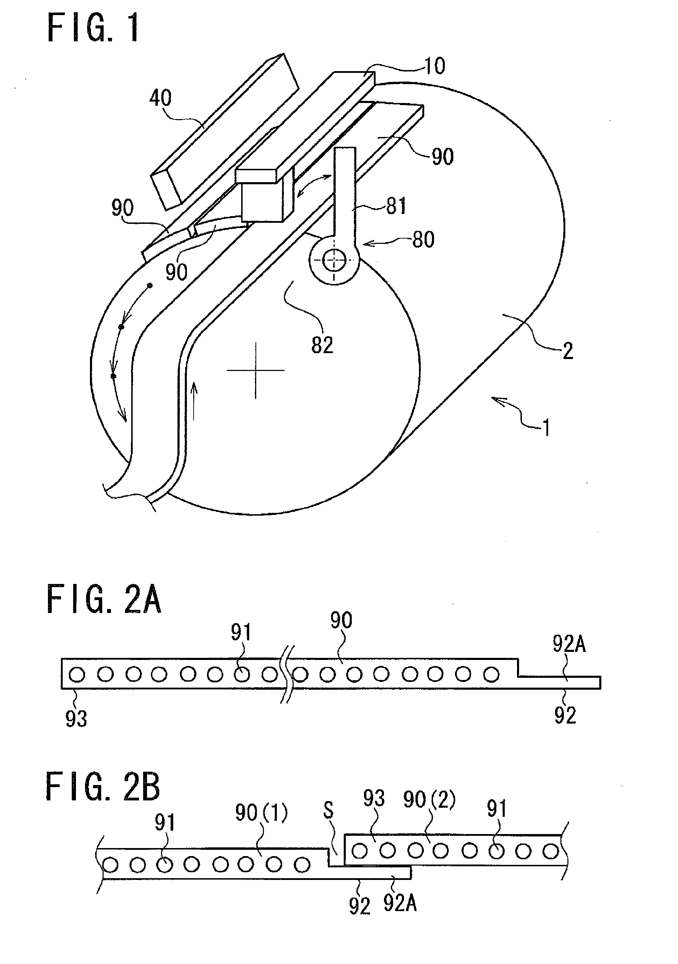

Fig. 1 is a perspective view of an essential part schematically illustrating an outline configuration of this manufacturing device.

The manufacturing device 1 includes a drum 2 which is horizontal in the axial direction and supply means (not shown) which supplies a strip-shaped member 90 to the drum 2 as illustrated. In addition, the manufacturing device 1 includes arranging means 10 which arranges the strip-shaped member 90 on the drum 2 and joining means 40 which joins side portions in the width direction of the strip-shaped members 90 arranged on the drum 2 to each other. The arranging means 10 and the joining means 40 are arranged at a predetermined distance in the drum peripheral direction above the drum 2.

The drum 2 is a support body which supports the strip-shaped member 90 at the time of manufacturing (forming) the tire constituent member and is a molding drum capable of enlarging/contracting or a transfer drum for transferring the tire constituent member formed on the outer periphery to a transferred body. In this manufacturing device 1, the drum 2 forms a cylindrical body rotatable around the axis, and a plurality of strip-shaped members 90, each having a predetermined length, are arranged by the arranging means 10 on the whole or a predetermined range of the outer peripheral surface thereof. The drum 2 holds the plurality of strip-shaped members 90 on the outer peripheral surface at each arrangement position. In addition, the drum 2 is rotated and driven by rotary drive means (not shown) formed of a driving source such as a motor, a transmission mechanism of the rotation power and the like, rotated at a predetermined rotation speed around the axis and stopped at an arbitrary rotation angle. As a result, the drum 2 is rotated and stopped in accordance with the width of the strip-shaped member 90 each time one strip-shaped member 90 is arranged, as will be described later. The plurality of strip-shaped members 90 are arranged in the peripheral direction in order on the drum 2 by repetition of this rotation and arrangement of the strip-shaped member 90 by the arranging means 10 at the time of the stop.

In this embodiment, the strip-shaped member 90 is formed in the form of lengthy sheets having a predetermined width, moves in the longitudinal direction and is continuously supplied from the supply means to the drum 2. In addition, the strip-shaped member 90 is arranged by the arranging means 10 in the axial direction (drum axial direction) of the drum 2 to one of side edges of the drum 2. Subsequently, the strip-shaped member 90 is cut into predetermined length by cutting means 80 provided in the vicinity of the side face of the drum 2. The cutting means 80 rotates a cutter 81 by rotating means (not shown) formed of a motor or the like and slides it on a side face 82 of the drum 2. The cutting means 80 cuts the strip-shaped member 90 along the side edge of the drum 2 by shearing it between the cutter 81 and the side face 82. The manufacturing device 1 cuts the strip-shaped member 90 by this cutting means 80 at each arrangement by the arranging means 10 on the drum 2. The plurality of strip-shaped members 90 are joined to each other at a joint portion formed on one of the side portions in the width direction after being arranged on the drum 2.

Figs. 2A and 2B are sectional views illustrating the strip-shaped members 90 cut away in the width direction. Fig. 2A illustrates one strip-shaped member 90, and Fig. 2B illustrates two strip-shaped members 90 (1) and 90 (2) adjacent in the drum peripheral direction (right-and-left direction in the figure) arranged on the drum 2.

The strip-shaped member 90 is formed having a predetermined thickness by juxtaposing a plurality of cords 91 extending in the longitudinal direction at predetermined intervals in the width direction (right-and-left direction in Fig. 2A) and by coating the both surfaces with unvulcanized rubber as illustrated. This strip-shaped member 90 has a joint portion (thinportion) 92A having a thickness relatively smaller than the other portion provided over the entirety along one side portion 92 in the width direction (right side in Fig. 2A) . The joint portion 92A of the strip-shaped member 90 is lug rubber made only of rubber and is continuously formed on one of the surfaces (lower side in Fig. 2A), which becomes the drum 2 side of the strip-shaped member 90. In addition, the joint portion 92A has a step from the other surface of the strip-shaped member 90 and protrudes by a predetermined length in the width direction of the strip-shaped member 90.

This strip-shaped member 90 is formed by using an extruder of unvulcanized rubber, for example. The extruder pushes out the unvulcanized rubber and the cords 91 juxtaposed in plural at the same time through an opening of a nozzle thereof through an insulation head (rubber extrusion head) provided at the extrusion end. As a result, the plurality of cords 91 are coated with the unvulcanized rubber, and the strip-shaped member 90 is continuously formed. At that time, an opening (opening for j oint portion) through which thin rubber is pushed out is formed at one end portion of the opening of the nozzle in compliance with the sectional shape of the joint portion 92A so that the joint portion 92A is formed at the side portion 92 of the strip-shaped member 90 at the same time. It is preferable that a conduit for supplying the rubber to the opening for joint portion (channel for joint portion) is separately provided in the insulation head independently of the other rubber channels and the sectional area of the channel for joint portion is formed relatively largely. As a result, the flow of the rubber in the channel for joint portion and the extrusion of the rubber from the opening for joint portion are made smooth, and the thin shape of the joint portion 92A can be formed stably and with accuracy without breakage or defect.

The strip-shaped member 90 is stocked in the above-described supply means after being formed and sequentially pulled out and supplied toward the drum 2 through the arranging means 10 while the joint portion 92A is located on one side. Alternatively, the strip-shaped member 90 is supplied to the drum 2 while being formed by the extruder provided in the supply means. The arranging means 10 arranges the supplied strip-shaped members 90 juxtaposed in the drum peripheral direction (See Fig. 2B) and sequentially arranges the plurality of strip-shaped members 90 on the drum 2 by overlapping the joint portion 92A of one of the side portions 92 with the other side portion 93. At that time, the strip-shaped members 90 are sequentially arranged by overlapping the other side portion 93 of the strip-shaped member 90 (2) to be arranged subsequently with the joint portion 92A of the previously arranged strip-shaped member 90 (1) in the overall longitudinal direction by the arranging means 10 . The adjacent strip-shaped members 90(1) and 90(2) are preferably arranged by being overlapped without a gap but may be arranged with a slight gap S (0 to 1 mm) on the outer face sides thereof (upper side in Fig. 2B).

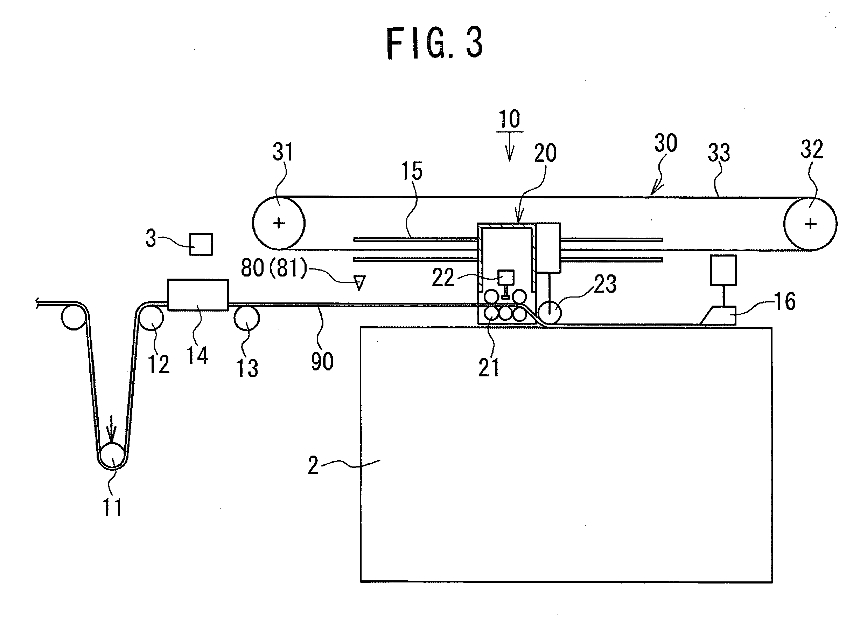

Fig. 3 is a side view of an essential part schematically illustrating this arranging means 10 when viewed from the outside in the radial direction (drum radial direction) of the drum 2 and illustrates a part of the arranging means 10 in a section.

The arranging means 10 includes three guide rolls 11, 12, 13 arranged along a movement path of the strip-shaped member 90, a position regulating member 14 which regulates positions of the both side portions 92 and 93 of the strip-shaped member 90, and biasing means (not shown) which biases one guide roll 11 downward. The arranging means 10 guides the strip-shaped member 90 having a position regulated by the guide rolls 11, 12, and 13 and the position regulating member 14 to the drum 2 while applying a predetermined tension.

Moreover, the arranging means 10 includes a running head 20 movable along the outer peripheral surface of the drum 2, a moving mechanism 30 which moves the running head 20 in both directions in the drum axial direction, and a guide rail 15 extended in parallel with the drum axial direction above the drum 2. The arranging means 10 supports and guides the running head 20, which is moved by the moving mechanism 30, by the guide rail 15 and arranges the strip-shaped member 90 guided as above on the drum 2 by the moving running head 20. Moreover, the arranging means 10 includes pressing means 16 which presses the arrangement distal end portion of the strip-shaped member 90 to the drum 2 and fixes the distal end portion of the strip-shaped member 90 to the drum 2 by pressing it with the pressing means 16.

The running head 20 guides the strip-shaped member 90 by regulating the position thereof in the vertical direction and the width direction, respectively, by a plurality of guide rolls 21 holding the strip-shaped member 90 from both sides vertically and flanges (not shown) provided on both axial ends of each of the guide rolls 21. The running head 20 presses the guided strip-shaped member 90 onto the drum 2 by a rotatable arrangement roll 23 displaced in the vertical direction by driving means. In that state, the running head 20 moves in the drum axial direction and arranges the strip-shaped member 90 at a predetermined position on the drum outer peripheral surface. In addition, the running head 20 has fixing means 22 formed of a piston/cylinder mechanism between the upper guide rolls 21 of the strip-shaped member 90. The fixing means 22 presses the distal end (lower end) of a piston rod moving back and forth from a cylinder onto the strip-shaped member 90 and fixes the strip-shaped member 90 by holding it with the lower guide rolls 21.

The moving mechanism 30 has a pair of rotatable pulleys 31 and 32, an endless timing belt 33 extended between them, and rotary drive means (not shown) formed of a motor or the like which rotates one of the pulleys 31 or 32 and drives the timing belt 33. The moving mechanism 30 circulates and drives the timing belt 33 in the both directions along the drum axial direction by being driven by the rotary drive means. As a result, the moving mechanism 30 moves the running head 20 connected to the timing belt 33 at a predetermined speed from a point on the outer periphery of the drum 2 to the outside in the drum axial direction and stops it at an arbitrary position. In addition, the moving mechanism 30 moves back and forth within a range between an advance limit position on the pressing means 16 side set on the outer periphery of the drum 2 and a retreat limit position beyond the side faces of the drum 2 on the opposite side.

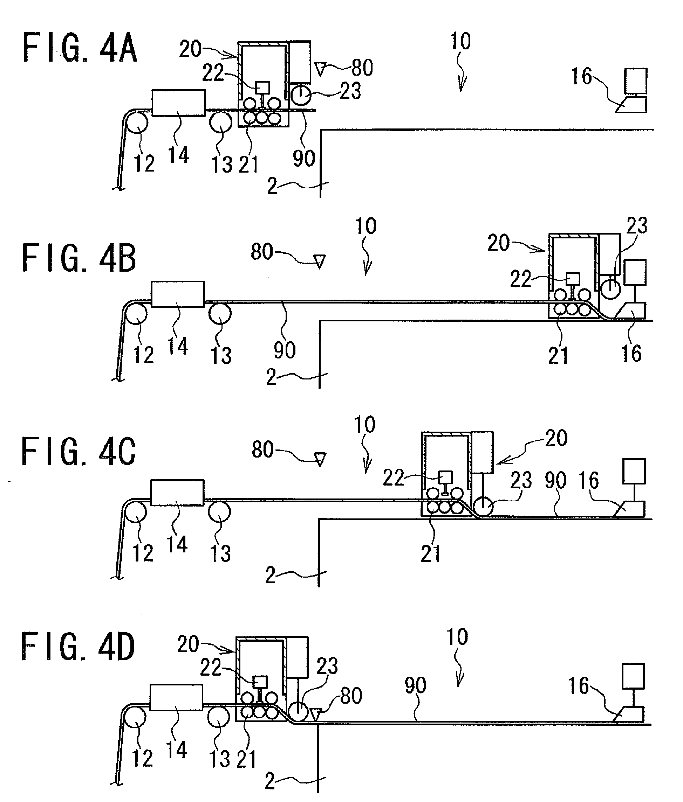

Fig. 4 is a side view of an essential part illustrating a procedure of arranging the strip-shaped member 90 by the arranging means 10 and schematically illustrates a state of each arrangement stage.

At the time of arranging the strip-shaped member 90, the distal end portion of the strip-shaped member 90 cut by the cutting means 80 is somewhat protruded to the front of the arrangement roll 23 from the running head 20 on one end side (left end side in Fig. 4A) of the drum 2. In addition, the strip-shaped member 90 is fixed by the fixing means 22 in the running head 20. In that state, the running head 20 is moved (See Fig. 4B), and the strip-shaped member 90 is pulled out in the drum axial direction and the running head 20 is stopped at the advance limit position on the pressing means 16 side. Subsequently, the distal end portion of the strip-shaped member 90 is pressed (crimped) and fixed by the pressing means 16 to the outer peripheral surface of the drum 2. Moreover, the fixation of the strip-shaped member 90 by the fixing means 22 is released, the arrangement roll 23 is lowered and pressed onto the strip-shaped member 90, and the strip-shaped member 90 is pressed by the arrangement roll 23 onto the drum 2.

Subsequently, the running head 20 is moved linearly in the drum axial direction toward the original position (See Fig. 4C), and the strip-shaped member 90 between the running head 20 and the pressing means 16 is sequentially pressed by the arrangement roll 23 onto the drum 2. As a result, the strip-shaped member 90 is continuously arranged in the drum axial direction while being bonded on the outer peripheral surface of the drum 2. In addition, the arrangement roll 23 is moved to the outside of the drum 2 (See Fig. 4D), the strip-shaped member 90 is arranged to the side edge of the drum 2, and the running head 20 is stopped at the retreat limit position. Subsequently, the strip-shaped member 90 is fixed by the fixing means 22 in the running head 20, and the strip-shaped member 90 is cut along the side edge of the drum 2 by the cutting means 80. After that, the fixation of the distal end portion of the strip-shaped member 90 by the pressing means 16 is released, and arrangement of one strip-shaped member 90 is finished. The arrangement roll 23 does not have to be provided in the running head 20, and the strip-shaped member 90 may be arranged without using the arrangement roll 23. In this case, the distal end portion of the strip-shaped member 90 is fixed by the pressing means 16 and then, the strip-shaped member 90 is arranged by the running head 20 moving to the retreat limit position in the drum axial direction without being bonded onto the outer peripheral surface of the drum 2. Subsequently, the running head 20 is displaced inward in the drum radial direction (axis of the drum 2) at the retreat limit position, and the strip-shaped member 90 between the pressing means 16 and the running head 20 is pressed onto the outer peripheral surface of the drum 2. As a result, the strip-shaped member 90 is bonded onto the outer peripheral surface of the drum 2.

The manufacturing device 1 arranges the first strip-shaped member 90 on the drum 2 and then, rotates the drum 2 only by a rotation angle depending on the width of the strip-shaped member 90 (See Fig. 1). The arranged strip-shaped member 90 is moved by this rotation from the arrangement position of the strip-shaped member 90 by the arranging means 10 and arranged at the adjacent position. Subsequently, the subsequent strip-shaped member 90 is similarly arranged while the other side portion 93 of the subsequent strip-shaped member 90 is overlapped with the one side portion 92 (joint portion 92A) of this strip-shaped member 90 (See Fig. 2) as described above. The arrangement of the strip-shaped member 90 and the rotation of the drum 2 are alternately repeated, and thus the predetermined number of the strip-shaped members 90 is sequentially arranged adjacently to each other in the drum peripheral direction. Moreover, the side portion 93 of the subsequent strip-shaped member 90 is overlapped by a predetermined width on the side portion 92 of the arranged strip-shaped member 90, and the side portions 92 and 93 of the adjacent strip-shaped members 90 are arranged while being overlapped with each other.

The manufacturing device 1 includes measuring means which measures the widths of the plurality of strip-shaped members 90 before the rotation of the drum 2, respectively, at a position somewhere in the movement path of the strip-shaped member 90 or on the outer peripheral side of the drum 2. The width of the strip-shaped member 90 while being supplied or the strip-shaped member 90 having been arranged on the drum 2 is measured by this measuring means, and the rotary drive means of the drum 2 is controlled based on the measurement result. The manufacturing device 1 controls the rotation of the drum 2 as above and rotates the drum 2 based on the measurement result of the width by the measuring means and stops each of the arranged strip-shaped members 90 at a position in the drum peripheral direction in accordance with the measurement width. As a result, the plurality of strip-shaped members 90 are positioned and arranged, respectively, by positioning the side portions 92 and 93 of the strip-shaped members 90 arranged by the arranging means 10 while being overlapped with each other. In the manufacturing device 1 (See Fig. 3), the measuring means 3 is provided above the position regulating member 14 of the arranging means 10, the width of the strip-shaped member 90 is measured before arrangement onto the drum 2, and the drum 2 is index-rotated in accordance with the measured width.

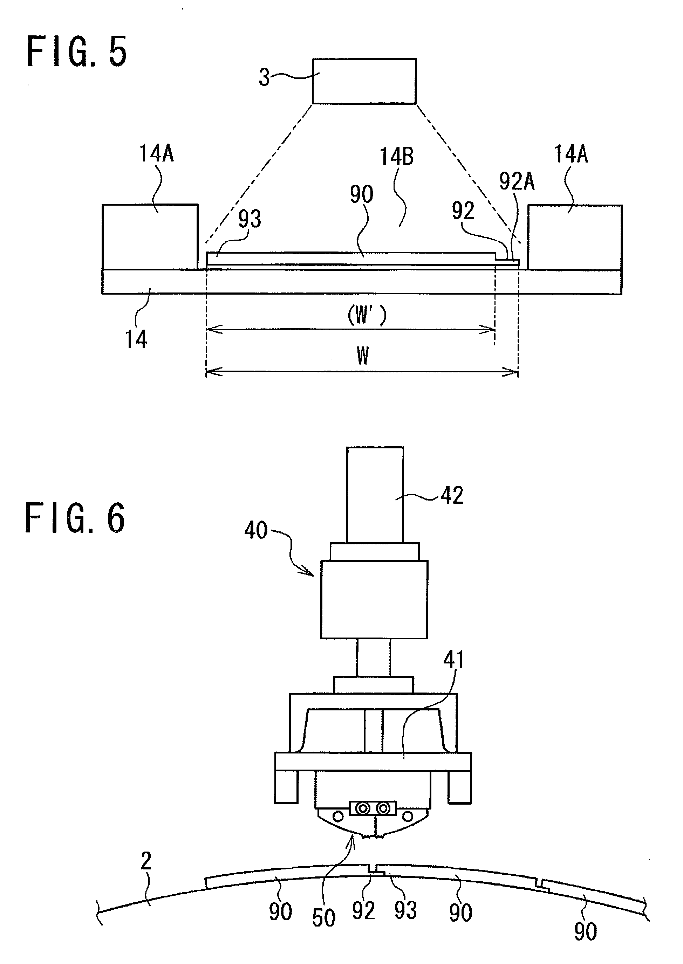

Fig. 5 is a front view schematically illustrating this measuring means 3 and also illustrates the strip-shaped member 90 and the position regulating member 14 when viewed from the longitudinal direction in a section.

The position regulating member 14 has a concave groove 14B which accommodates the strip-shaped member 90 between side walls 14A on the both sides and moves and guides the strip-shaped member 90 in the concave groove 14B as illustrated. In contrast, the measuring means 3 is arranged above the center part in the width direction of the concave groove 14B. The measuring means 3 is a commercial measurement sensor (a line sensor which measures the width of the strip-shaped member 90 in a non-contact manner) which can measure the width of the strip-shaped member 90 (the width in the direction corresponding to the drum peripheral direction) and arranged with its sensor surface facing the strip-shaped member 90. The measuring means 3 irradiates the strip-shaped member 90 with one-dimensional light from light projecting means and receives reflective light thereof by light receiving means. The measuring means 3 calculates the width of the strip-shaped member 90 from the state of the reflected light, A/D converts the measured value of the calculated width or the like and outputs it to a control device, which will be described later.

The manufacturing device 1 measures the width W of each of the strip-shaped members 90 arranged on the drum 2 between the both side portions 92 and 93 by the measuring means 3 and feedback-controls the rotation of the drum 2 based on the measurement result (actually measured width) (See Fig. 1). Specifically, the drum 2 is rotated only by a predetermined amount in accordance with the measured width W of the strip-shaped member 90 each time the strip-shaped member 90 is arranged by the arranging means 10 , and the arranged strip- shaped member 90 is displaced only by a distance in the drum peripheral direction corresponding to the measured width W. As a result, the side portion 92 to be overlapped of the arranged strip-shaped member 90 is arranged at a predetermined position in the drum peripheral direction in accordance with the arrangement position (scheduled arrangement position) of the side portion 93 of the subsequent strip-shaped member 90 by the arranging means 10.

In this way, the manufacturing device 1 positions the side portions 92 and 93 of the adjacent strip-shaped members 90 (See Fig. 2), matches their positions in the drumperipheral direction, and arranges each strip-shaped member 90 on the drum 2. In addition, the joint portion 92A and the side portion 93 are overlapped by a predetermined width and brought into close contact with each other, and the plurality of strip-shaped members 90 (See Fig. 1) are arranged on the whole or a predetermined angular range in the peripheral direction of the drum 2. With this arrangement, the manufacturing device 1 joins the side portions 92 and 93 of the strip-shaped member 90 adjacent in the drum peripheral direction by the joining means 40. The joining means 40 is arranged on the front side in the rotating direction of the drum 2 with respect to the arranging means 10. In addition, the joining means 40 is arranged at a position in the drum peripheral direction where the side portions 92 and 93 to be joined are located when the drum 2 is stopped in association with the arrangement work of the strip-shaped member 90. The joining means 40 is arranged outside in the drum radial direction over the whole side portions 92 and 93 and joins the whole side portions 92 and 93 having been displaced downward while the drum 2 is stopped each time the drum 2 is stopped.

Fig. 6 is a front view schematically illustrating an essential part of the joining means 40 and also illustrates the drum 2 and the strip-shaped member 90 close to the joining means 40 when viewed from the outside in the drum axial direction.

The joining means 40 includes a frame 41 extending along the side portions 92 and 93 to be joined of the strip-shaped member 90 and a piston/cylinder mechanism 42 which is connected to the frame 41 and moves the frame 41 in the drum radial direction. Moreover, the joining means 40 includes abutting means 50 opposing the side portions 92 and 93 on the lower face of the frame 41.

The joining means 40 operates the piston/cylinder mechanism 42 to move the frame 41 and causes the abutting means 50 to be close to or separates it away from the drum 2. Moreover, with the movement of the frame 41 to the drum 2 side, the joining means 40 brings the abutting means 50 into contact with the strip-shaped member 90 to press it and joins the overlapped side portions 92 and 93 with each other by the abutting means 50.

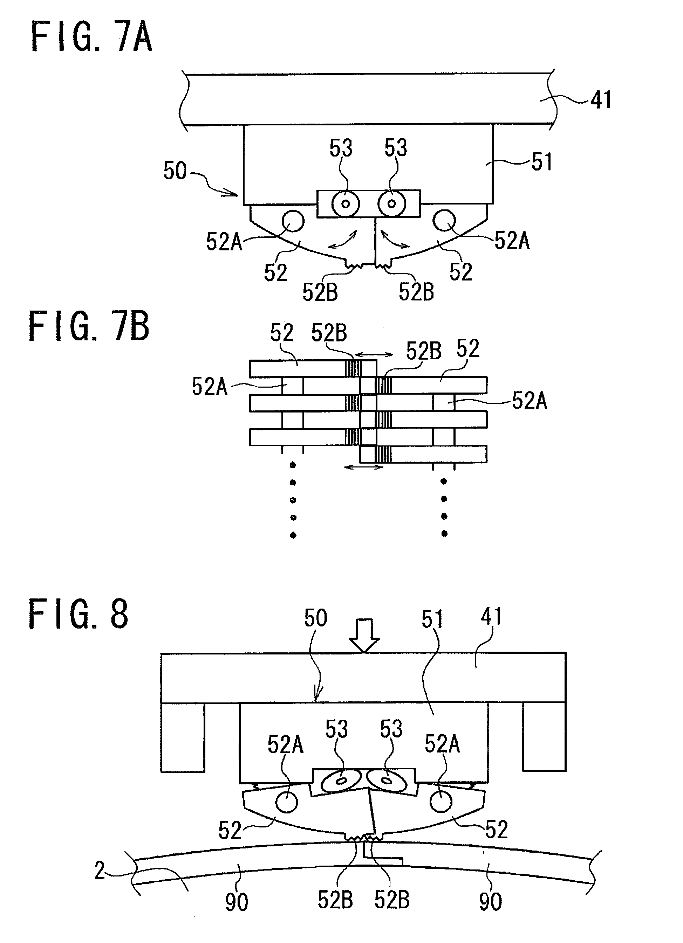

Fig. 7A is an enlarged view of the abutting means 50 in Fig. 6 and Fig. 7B is a bottom view. In addition, Fig. 8 is an enlarged view illustrating a state in which the abutting means 50 is pressed onto the strip-shaped member 90.

The abutting means 50 is a joining mechanism for bringing close to each other and joining the side portions 92 and 93, and has a base plate 51, a right and left pair of pulling members (swing claws) 52, and pressure vessels 53 arranged between the base plate 51 and each pulling member 52 as illustrated in Fig. 7. The pair of pulling members 52 are arranged in plural at equal intervals in the drum axial direction (top-to-bottom direction in Fig. 7B), respectively, and alternately over the whole lengths of the side portions 92 and 93 . In addition, the pair of pulling members 52 are arranged with the proximate end side being located between each other and alternately in the drum axial direction, respectively.

The pair of pulling members 52 are rotatably connected to the base plate 51 via hinges 52A, respectively, on the outer end side thereof and are rotated around the hinges 52A in directions opposite to each other, and the proximate end sides swing and are displaced (See Fig. 8) . The plural pairs of pulling members 52 cause concave-convex contact surface 52B formed on the lower face of each of the pair to be displaced in accordance with pressing onto the strip-shaped member 90. The contact surfaces 52B on the both sides get close from the separate positions (positions illustrated in Fig. 7) and are displaced to the overlapped position where they are overlapped with each other (position illustrated in Fig. 8). With that movement, the plural pairs of pulling members 52 pull the side portions 92 and 93 of the strip-shaped members 90 in contact with each of the contact surfaces 52B, make them abutted against each other, and join the adjacent strip-shaped members 90 over the whole length in the longitudinal direction. Moreover, if the gap S (See Fig. 2B) is not 0, the gap is eliminated, and the strip-shaped members 90 are joined without a gap.

At that time, the joining means 4 0 brings the plural pairs of the pulling members 52 into contact with the whole length in the longitudinal direction of the strip-shaped members 90. Furthermore, the joining means 40 brings the right and left contact surfaces 52B at the separate positions (See Fig. 7) into contact with the one side portion 92 and the other side portion 93, respectively, of the opposing strip-shaped members 90 and makes the contact surface 52B bite into the side portions 92 and 93. In that state, the pulling members 52 are pressed onto the strip-shaped members 90, and thus the contact surface 52B are gradually displaced. The side portions 92 and 93 are pulled together uniformly and reliably over the whole length by the plural pairs of the contact surfaces 52B. Subsequently, the contact surfaces 52B are displaced to the overlapped positions (See Fig. 8), and the side portions 92 and 93 are closely abutted against each other and firmly crimped. At the same time, the other side portion 93 is pressed onto the joint portion 92A of the one side portion 92 by the pressing force of the pulling members 52, and thus the contact surfaces thereof are firmly crimped. As a result, the side portions 92 and 93 of the strip-shaped members 90 arranged adjacently on the drum 2 are joined with a wide area through the plurality of joint surfaces over the whole length, and high joint strength is assured for the side portions 92 and 93.

After the joint, if the abutting means 50 is separated from the strip-shaped members 90, the pair of pulling members 52 are displaced by a recovering force of the pressure vessels 53 and the contact surfaces 52B return to the original separate positions. This pressure vessel 53 is formed of a deformable lengthy tube in which a gas is sealed and is arranged between the proximate end (swing end) sides of the plurality of pulling members 52 on the both sides and the base plate 51, respectively. If the pulling members 52 are pressed onto the strip-shaped member 90, the pressure vessel 53 is gradually compressed by the pressure and squeezed(See Fig. 8) and recovers to the original shape by expansion depending on the release of the pressure (See Fig. 7). The pressure vessels 53 recover the pair of pulling members 52 to the original positions before joint by this recovering force and maintain the state.

Subsequently, a procedure and an operation in which this manufacturing device 1 arranges a plurality of the strip-shaped members 90 in the drum axial direction to dispose the strip-shaped members in the drum peripheral direction and manufactures the tire constituent member will be described. The following procedure and the like are controlled by a control device (not shown) and executed by operating each part of the device in association with predetermined timing and conditions. This control device is composed of a computer provided with a microprocessor (MPU), a ROM (Read Only Memory) which stores various programs, aRAM (Random Access Memory) which temporarily stores data to be directly accessed by the MPU and the like, for example. The control device has each part of the device connected via connecting means and transmits/receives control signals and various data with each part of the device to thereby have each operation executed by each part of the device. Moreover, the control device has the measuring means 3 (See Fig. 5) for the width W of the strip-shaped member 90 and the rotary drive means of the drum 2 connected thereto, and by rotating the drum 2 based on the measurement result of the measuring means 3 as described above, arranges the side portions 92 and 93 of the strip-shaped members 90 to be joined with their positions matched. Therefore, this control device constitutes the rotation control means of the drum 2 and the positioning means of the side portions 92 and 93.

The manufacturing device 1 first pulls out the strip-shaped member 90 by operating the arranging means 10 (See Figs. 3 and 4) and supplies the strip-shaped member 90 in which the joint portion 92A having a relatively smaller thickness is provided on one side portion 92 (See Fig. 2), to the drum 2. This strip-shaped member 90 is arranged in the drum axial direction on the outer periphery of the drum 2, and the strip-shaped member 90 is cut by the cutting means 80. Subsequently, the drum 2 is rotated only by a predetermined amount, and the subsequent strip-shaped member 90 is arranged by the arranging means 10. Thepluralityof strip-shapedmembers 90 are sequentially arranged on the outer periphery of the drum 2 by overlapping the joint portion 92A of the one side portion 92 with the other side portion 93 while the arrangement and cutting of the strip-shaped members 90 and the rotation of the drum 2 are repeated.

At that time, the width W between the both side portions 92 and 93 of each strip-shaped member 90 is measured by the measuring means 3 (See Fig. 5), and the drum 2 is rotated in accordance with the measured width W each time the strip-shaped member 90 is arranged. As a result, the side portion 92 of the arranged strip-shaped member 90 is arranged in accordance with the arrangement position of the side portion 93 of the strip-shaped member 90 to be arranged the next time. As described above, the drum 2 is rotated based on the measurement result of the width W of the strip-shaped member 90, and the positions of the side portions 92 and 93 to be overlapped and arranged are matched. Moreover, the strip-shaped members 90 adjacent in the drum peripheral direction are joined by the joining means 40 (See Figs. 6 and 8), and the strip-shaped members 90 are joined to each other on the drum 2 while the plurality of strip-shaped members 90 are arranged. The manufacturing device 1 manufactures the tire constituent member (carcass ply, here) having a predetermined length by rotating the drum 2 each time the strip-shaped member 90 is arranged to sequentially arrange the plurality of strip-shaped members 90 in the drum peripheral direction and by joining the side portions 92 and 93 of the adjacent strip- shaped members 90 as described above.

At the time of manufacturing the tire constituent member as described above, the plurality of strip-shaped members 90 are arranged on the drum 2 by overlapping the thin joint portion 92A provided on one side portion 92 with the other side portion 93 and the side portions 92 and 93 are joined and integrated in this embodiment. At that time, the both side portions 92 and 93 can be reliably abutted against each other over the whole length by the joint portion 92A and be stably joined, and a joint area between the side portions 92 and 93 is increased and they can be joined reliably and firmly. As a result, the joint strength of the strip-shaped member 90 can be improved. Moreover, since the step between the side portions 92 and 93 after the joint can be reduced, the generation of air intrusion in the vicinity of the side portions 92 and 93 can be suppressed, and the quality of the tire constituent member can be improved. At the same time, weight reduction and improvement of the uniformity of the tire can be realized by arranging this tire constituent member. Particularly if a carcass ply is to be manufactured, the cords 91 of the strip-shaped members 90 are not overlapped and the cords 91 can be uniformly arranged over the whole tire constituent member. Moreover, since the joint portion 92A is formed thin, the amount of required material in the strip-shaped member 90 can be decreased and a cost can be reduced as compared with the case in which the side portions 92 and 93 having the same thickness are overlapped.

Moreover, in the manufacturing device 1, the drum 2 is rotated based on the measurement result of the width w of each strip-shaped member 90 by the measuring means 3, the positions of the side portions 92 and 93 to be overlapped and arranged are matched and the plurality of strip-shaped members 90 are arranged on the drum 2. Since the rotation of the drum 2 is controlled based on the actually measured width W of the strip-shaped member 90, even if the widths W of the plurality of the strip-shaped members 90 are varied or the tire constituent member is to be manufactured by the strip-shaped members 90 with different widths W, the side portions 92 (the joint portion 92A) and 93 can be reliably overlapped and joined with accuracy. Particularly, the dimension of the strip-shaped member 90 made of unvulcanized rubber can be easily fluctuated during manufacture, it is effective to control the rotation of the drum 2 by using the actually measured value of the width W measured each time instead of a predetermined set value, whereby stable manufacture can be assured. Moreover, if a carcass ply is to be manufactured, the cords 91 in the vicinity of the side portions 92 and 93 can be arranged in accordance with arrangement pitch of the cords 91 in the other portions.

Therefore, according to this embodiment, the side portions 92 and 93 of the plurality of strip-shaped members 90 to be arranged in the drum 2 can be joined with accuracy by matching the positions accurately while sufficient joint strength is assured, and a reliably joined tire constituent member can be stably manufactured.

The width of the strip-shaped member 90 is preferably used for rotation control of the drum 2 by measuring a width W' obtained by excluding the joint portion 92A between the both side portions 92 and 93 of each strip-shaped member 90 by the measuring means 3 (See fig. 5). As a result, the positions of the joint portion 92A of one side portion 92 and the other side portion 93 to be overlapped with each other can be arranged by being matched with accuracy. Moreover, the side portions 92 and 93 can be joined accurately without being affected by fluctuation in the width of the joint portion 92A and the side edge shape. The joint portion 92A of the strip-shaped member 90 is preferably formed having a tapered section (a triangular sectional shape, for example) by gradually thinning the thickness toward the projecting end portion. As a result, a torn lug or breakage of the joint portion 92A at the time of extrusion molding can be suppressed, the step in the vicinity of the side portions 92 and 93 is made smaller at the same time, and the effect of suppressing air intrusion can be increased.

Here, if the drum 2 is a transfer drum and a plurality of the strip-shaped members 90 are positioned in accordance with each measured width and arranged on the outer periphery thereof, the length of the manufactured tire-constituent member to be transferred to a body to be transferred may not match a target length. In this case, when the tire constituent member is to be transferred from the drum 2 to the body to be transferred depending on the difference in the length between the both, the tire constituent member can be transferred so as to have the target length, by setting a difference in rotation peripheral speed (peripheral speed in each outer peripheral surface) between the drum 2 and the body to be transferred.

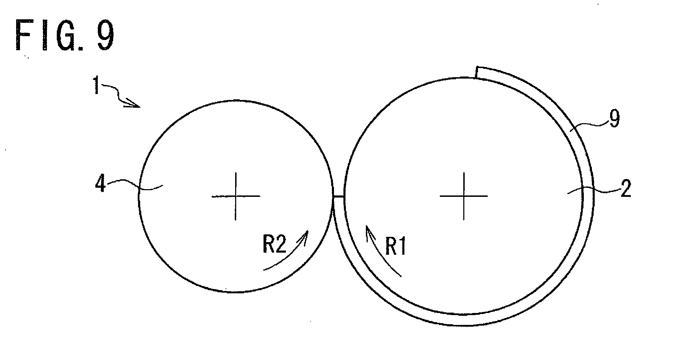

Fig. 9 is a side view of an essential part schematically illustrating a transfer process of this tire constituent member.

Here, as illustrated, in addition to the drum 2, the manufacturing device 1 includes a rotatable body 4 to be transferred to which the tire constituent member 9 formed on the outer periphery of the drum 2 is transferred. Moreover, the manufacturing device 1 includes a moving mechanism (not shown) which brings the drum 2 and the body 4 to be transferred close to and separates them from each other, and rotary drive means (not shown) of the body 4 to be transferred, whereby the transfer means of the tire constituent member 9 is constituted. The body 4 to be transferred is a cylindrical drum for transferring the tire constituent member 9, for example, a molding drum for an unvulcanized tire, a rigid core, or a tire constituent member or an intermediate molding body arranged on each drum or the rigid core. The body 4 to be transferred is driven by the rotary drive means, rotated at a predetermined rotation speed around the axis and stopped at an arbitrary rotation angle.

At the time of the transfer of the tire constituent member 9, the manufacturing device 1 first obtains the length in the drum peripheral direction of the tire constituent member 9 formed on the outer periphery of the drum 2. Subsequently, the obtained length of the tire constituent member 9 and the predetermined target length set in advance are compared by the above-described control device. At that time, the manufacturing device 1 measures the length of the tire constituent member 9 on the drum 2 by a length measurement sensor (not shown) arranged on the outer periphery side of the drum 2 and obtains the length for the tire constituent member 9. Alternatively, the manufacturing device 1 totals the measured widths of the strip-shaped members 90 by the measuring means 3 (See Fig. 5) through the use of the control device and obtains the length of the tire constituent member 9. Moreover, the target length of the tire constituent member 9 is set in the control device in accordance with the size, type and the like of the tire constituent member 9 or the tire to be manufactured, and is read out by the control device which is length-comparing means and is used.

Subsequently, the manufacturing device 1 brings the drum 2 and the body 4 to be transferred close to each other and brings one end portion of the tire constituent member 9 on the drum 2 into contact with a predetermined position of the body 4 to be transferred. Moreover, the tire constituent member 9 is pressed onto the body 4 to be transferred with a predetermined pressure and the tire constituent member 9 is pressed. Subsequently, the drum 2 and the body 4 to be transferred are rotated in synchronization in the directions opposite to each other, and the tire constituent member 9 is transferred from the drum 2 to the outer periphery of the body 4 to be transferred sequentially from one end portion to the other end portion. The manufacturing device 1 rotates the drum 2 and the body 4 to be transferred at rotation peripheral speeds R1 and R2 different from each other based on the comparison result of the lengths of the tire constituent members 9 by the control device (comparing means), at the time of the transfer of the tire constituent member 9 to the body 4 to be transferred. As a result, the manufacturing device 1 deforms the tire constituent member 9 to be transferred to the body 4 to be transferred to the target length and adjusts the length of the tire constituent member 9.

Specifically, if the length of the tire constituent member 9 is shorter than the target length based on the comparison result of the lengths, the manufacturing device 1 relatively raises the rotation peripheral speed R2 of the body 4 to be transferred with respect to the rotation peripheral speed R1 of the drum 2. As a result, the tire constituent member 9 during transfer is gradually pulled by the body 4 to be transferred, and the tire constituent member 9 is elongated and deformed so as to be prolonged. In contrast, if the length of the tire constituent member 9 is longer than the target length, the rotation peripheral speed R2 of the body 4 to be transferred is relatively lowered with respect to the rotation peripheral speed R1 of the drum 2, and the tire constituent member 9 during transfer is transferred without elongation or deformation. As described above, the manufacturing device 1 has length adjusting means which adjusts the length of the tire constituent member 9 by controlling the rotations of the drum 2 and the body 4 to be transferred. The manufacturing device 1 sets a speed difference by the length adjusting means, between the rotation peripheral speed R1 of the drum 2 and the rotation peripheral speed R2 of the body 4 to be transferred, depending on the difference in the compared lengths of the tire constituent member 9. As described above, the tire constituent member 9 having the target length is transferred to the outer periphery of the body 4 to be transferred.

### (Manufacturing test of tire constituent member)

In order to confirm the effects of the present invention, the plurality of strip-shaped members 90 was arranged on the drum 2, and the side portions 92 and 93 thereof were joined and the tire constituent member 9 (a carcass ply, here) was manufactured by the manufacturing device 1 described above. First, a joint state at each joint position of the tire constituent member 9 was observed. As a result, it was confirmed that the other side portion 93 was overlapped with the joint portion 92A of the one side portion 92 of the strip-shaped member 90 and arranged at each joint position, and they were joined without air intrusion, a gap and the like. Moreover, in order to check the joint strength, the manufactured tire constituent member 9 was pulled in the longitudinal direction (in the direction orthogonal to the side portions 92 and 93 of the strip-shaped member 90) and elongated to approximately twice the length. As a result, the both side portions 92 and 93 were maintained in a joined state without removal. Therefore, it was found that high joint strength is obtained for the side portions 92 and 93 of the joined strip-shaped members 90.

From the above result, it was proved that the side portions 92 and 93 of the plurality of strip-shaped members 90 to be arranged on the drum 2 can be joined with accuracy by making the positions matched accurately while sufficient joint strength is assured, and the reliably joined tire constituent member 9 can be stably manufactured.

### Reference Signs List

- 1: manufacturing device for a tire constituent member
- 2: drum
- 3: measuring means
- 4: body to be transferred
- 9: tire constituent member
- 10: arranging means
- 14: position regulating member
- 15: guide rail
- 16: pressing means
- 20: running head
- 21: guide roll
- 22: fixing means
- 23: arrangement roll
- 30: moving mechanism
- 33: timing belt
- 40: joining means
- 41: frame
- 42: piston/cylinder mechanism
- 50: abutting means
- 51: base plate
- 52: pulling member
- 53: pressure vessel
- 80: cutting means
- 81: cutter
- 90: strip-shaped member
- 91: cord
- 92, 93: side portion
- 92A: joint portion

## Claims

1. A device for manufacturing a constituent member of a tire, provided with a drum (2) on which a plurality of strip-shaped members (90) is sequentially arranged in a peripheral direction by being rotated each time the strip-shaped member (90) is arranged and manufacturing a constituent member of a tire by joining side portions (92, 93) of the strip-shaped members (90) adjacent in the drum (2) peripheral direction, comprising:
supply means which supplies the strip-shaped member (90) in which a joint portion (92A) having a relatively small thickness is provided on one side portion (92,93), to a drum;
arranging means which sequentially arranges the plurality of strip-shaped members (90) on the drum (2) by overlapping the joint portion (92A) on one of the side portions (92,93) with the other side portion (92,93);
measuring means (3) which measures a width between the both side portions (92,93) of each strip-shaped member (90);
rotation control means which rotates the drum (2) based on a measurement result of the width by the measuring means (3) to position the side portions to be arranged while overlapping by the arranging means; and
joining means (40) which joins the side portions (92, 93) of the strip-shaped members (90) arranged on the drum, where the joining means (40) has a frame (41) extending along the side portions (92, 93) of the strip-shaped members (90) and abutting means (50) on a lower face of the frame (41), the abutting means (50) abutting the overlapped side portions (92,93).

2. The device for manufacturing a constituent member of a tire according to claim 1, wherein
the rotation control means rotates the drum (2) in accordance with a measured width of the strip-shaped member (90) each time the strip-shaped member (90) is arranged by the arranging means and arranges the side portion (92,93) of the arranged strip-shaped member (90) in accordance with an arrangement position of the side portion (92,93) of the subsequent strip-shaped member (90) by the arranging means.

3. The device for manufacturing a constituent member of a tire according to claim 1 or 2, wherein
the measuring means (3) measures the width excluding a joint portion between the both side portions (92,93) of each strip-shaped member (90).

4. The device for manufacturing a constituent member of a tire according to any of claims 1 to 3, further comprising:
a rotatable body (4) for transferring to which the constituent member of a tire formed on an outer periphery of the drum (2) is transferred;
means which obtains a length in a drum (2) peripheral direction of the constituent member of a tire on the drum (2) ;
comparing means which compares the obtained length of the constituent member of a tire and a set target length of the constituent member of a tire;
transferring means which brings the constituent member of a tire on the drum (2) and the body for transferring (4) into contact with each other, to rotate the drum (2) and the body for transferring (4), and which transfers the constituent member of a tire from the drum (2) to the body for transferring; and
length adjusting means which rotates the drum (2) and the body for transferring (4)at different rotation peripheral speeds-from each other based on a comparison result by the comparing means and which deforms the constituent member of a tire to be transferred to the body for transferring (4) toward the target length, at the time of transfer by the transferring means.

5. A method for manufacturing a constituent member of a tire by sequentially arranging a plurality of strip-shaped members (90) in a drum (2) peripheral direction by rotating a drum (2) each time the strip-shaped member (90) is arranged and by joining side portions (92,93) of adjacent strip-shaped members (90), comprising the steps of:
a supply step of supplying the strip-shaped member (90) in which a joint portion (92A) having a relatively small thickness is provided on one of the side portions (92,93), to the drum (90);
an arrangement step of sequentially arranging the plurality of strip-shaped members (90) on the drum (2), by overlapping the joint portion (92A) on one of the side portions (92,93) with the other side portion (92,93);
a measurement step of measuring a width between the both side portions (92,93) of each strip-shaped member (90);
a positioning step of rotating the drum (2) based on a measurement result of the width in the measurement step, to position the side portions to be arranged by being overlapped in the arrangement step;
a joining step of joining the side portions (92,93) of the strip-shaped members (90) arranged on the drum (2), wherein
the joining step includes a step of abutting overlapped side portions (92, 93) by abutting means (50) provided on a lower face of a frame (41) of joining means (40), the frame (41) extending along the side portions (92,93) of the strip-shaped members (90).

6. The method for manufacturing a constituent member of a tire according to claim 5, wherein
the positioning step includes a step of rotating the drum (2) in accordance with the measured width of the strip-shaped member (90) each time the strip-shaped member (90) is arranged in the arrangement step, and of arranging the side portion (92, 93) of the arranged strip-shaped member (90) in accordance with an arrangement position of the side portion (92, 93) of the subsequent strip-shaped member (90) in the arrangement step.

7. The method for manufacturing a constituent member of a tire according to claim 5 or 6, wherein
the measurement step is a step of measuring the width excluding a joint portion (92A) between the both side portions (92,93) of each strip-shaped member(90).

8. The method for manufacturing a constituent member of a tire according to any of claims 5 to 7, further comprising the steps of:
an obtaining step of obtaining a length in a drum (2) peripheral direction of a constituent member of a tire formed on an outer periphery of a drum (2);
a comparing step of comparing the obtained length and a set target length of the constituent member of a tire;
a bringing step of bringing the constituent member of a tire on the drum (2) and a body for transferring (4) into contact with each other, to rotate the drum (2) and the body for transferring (4) and transferring the constituent member of a tire from the drum (2) to the body for transferring (4); and
a rotating step of rotating the drum (2) and the body for transferring (4) at different rotation peripheral speeds from each other based on a comparison result of the lengths of the constituent member of a tire, thereby deforming the constituent member of a tire to be transferred to the body for transferring (4) toward the target length, at the time of transfer to the body for transferring (4).

## Patentansprüche

1. Vorrichtung zur Herstellung eines Bestandteils eines Reifens, die mit einer Trommel (2) versehen ist, auf der eine Vielzahl von streifenförmigen Elementen (90) sequentiell in einer Umfangsrichtung angeordnet wird, indem jedes Mal gedreht wird, wenn das streifenförmige Element (90) angeordnet wird, und zur Herstellung eines Bestandteils eines Reifens durch Verbinden von Seitenabschnitten (92, 93) der streifenförmigen Elemente (90), die in der Umfangsrichtung der Trommel (2) benachbart sind, wobei die Vorrichtung aufweist:
ein Zuführmittel, das das streifenförmige Element (90), bei dem ein Verbindungsabschnitt (92A) mit einer relativ geringen Dicke an einem Seitenabschnitt (92, 93) bereitgestellt wird, zu einer Trommel zuführt;
ein Anordnungsmittel, das sequentiell die Vielzahl der streifenförmigen Elemente (90) auf der Trommel (2) anordnet, indem der Verbindungsabschnitt (92A) auf einem der Seitenabschnitte (92, 93) mit dem anderen Seitenabschnitt (92, 93) überlappt wird;
ein Messmittel (3), das eine Breite zwischen den beiden Seitenabschnitten (92, 93) eines jeden streifenförmigen Elementes (90) misst;
ein Rotationssteuermittel, das die Trommel (2) auf der Basis eines Messergebnisses der Breite mittels des Messmittels (3) dreht, um die Seitenabschnitte so zu positionieren, dass sie während des Überlappens mittels des Anordnungsmittels angeordnet werden; und
ein Verbindungsmittel (40), das die Seitenabschnitte (92, 93) der streifenförmigen Elemente (90), die auf der Trommel angeordnet sind, verbindet, wobei das Verbindungsmittel (40) einen Rahmen (41) aufweist, der sich entlang der Seitenabschnitte (92, 93) der streifenförmigen Elemente (90) erstreckt, und ein Mittel (50) zum Aneinanderfügen auf einer unteren Fläche des Rahmens (41), wobei das Mittel (50) für das Aneinanderfügen die überlappten Seitenabschnitte (92, 93) aneinanderfügt.

2. Vorrichtung zur Herstellung eines Bestandteils eines Reifens nach Anspruch 1, bei der
das Rotationssteuermittel die Trommel (2) in Übereinstimmung mit einer gemessenen Breite des streifenförmigen Elementes (90) dreht, jedes Mal dann, wenn das streifenförmige Element (90) mittels des Anordnungsmittels angeordnet wird, und den Seitenabschnitt (92, 93) des angeordneten streifenförmigen Elementes (90) in Übereinstimmung mit einer Position der Anordnung des Seitenabschnittes (92, 93) des nachfolgenden streifenförmigen Elementes (90) mittels des Anordnungsmittels anordnet.

3. Vorrichtung zur Herstellung eines Bestandteils eines Reifens nach Anspruch 1 oder 2, bei der
das Messmittel (3) die Breite misst, ausschließlich eines Verbindungsabschnittes zwischen den beiden Seitenabschnitten (92, 93) eines jeden streifenförmigen Elementes (90).

4. Vorrichtung zur Herstellung eines Bestandteils eines Reifens nach einem der Ansprüche 1 bis 3, die außerdem aufweist:
einen drehbaren Körper (4) für das Übertragen, wobei der Bestandteil eines Reifens, der auf einem äußeren Umfang der Trommel (2) gebildet wird, übertragen wird;
ein Mittel, das eine Länge des Bestandteils eines Reifens auf der Trommel (2) in einer Umfangsrichtung der Trommel (2) erhält;
ein Mittel zum Vergleichen, das die erhaltene Länge des Bestandteils eines Reifens und eine eingestellte Solllänge des Bestandteils eines Reifens vergleicht;
ein Übertragungsmittel, das den Bestandteil eines Reifens auf der Trommel (2) und den Körper (4) für das Übertragen miteinander in Kontakt bringt, um die Trommel (2) und den Körper (4) für das Übertragen zu drehen, und das den Bestandteil eines Reifens von der Trommel (2) auf den Körper für das Übertragen überträgt; und
ein Mittel für das Einstellen der Länge, das die Trommel (2) und den Körper (4) für das Übertragen mit voneinander unterschiedlichen Umfangsgeschwindigkeiten der Drehung dreht, basierend auf einem Ergebnis des Vergleichs mittels des Vergleichsmittels, und das den Bestandteil eines Reifens, der auf den Körper (4) für das Übertragen übertragen werden soll, bis zur Solllänge zum Zeitpunkt der Übertragung mittels des Übertragungsmittels verformt.

5. Verfahren zur Herstellung eines Bestandteils eines Reifens durch sequentielles Anordnen einer Vielzahl von streifenförmigen Elementen (90) in einer Umfangsrichtung einer Trommel (2) durch Drehen einer Trommel (2) jedes Mal dann, wenn das streifenförmige Element (90) angeordnet wird, und durch Verbinden von Seitenabschnitten (92, 93) von benachbarten streifenförmigen Elementen (90), das die folgenden Schritte aufweist:
einen Zuführschritt für das Zuführen des streifenförmigen Elementes (90), bei dem ein Verbindungsabschnitt (92A) mit einer relativ geringen Dicke an einem der Seitenabschnitte (92, 93) bereitgestellt wird, zur Trommel (2);
einen Anordnungsschritt für das sequentielle Anordnen der Vielzahl der streifenförmigen Elemente (90) auf der Trommel (2), indem der Verbindungsabschnitt (92A) auf einem der Seitenabschnitte (92, 93) mit dem anderen Seitenabschnitt (92, 93) überlappt wird;
einen Messschritt für das Messen einer Breite zwischen den beiden Seitenabschnitten (92, 93) eines jeden streifenförmigen Elementes (90);
einen Positionierschritt für das Drehen der Trommel (2) auf der Basis eines Messergebnisses der Breite beim Messschritt, um die Seitenabschnitte, die beim Anordnungsschritt durch Überlappung angeordnet werden sollen, zu positionieren;
einen Verbindungsschritt für das Verbinden der Seitenabschnitte (92, 93) der streifenförmigen Elemente (90), die auf der Trommel (2) angeordnet sind, wobei
der Verbindungsschritt einen Schritt für das Aneinanderfügen von überlappten Seitenabschnitten (92, 93) mittels des Mittels (50) zum Aneinanderfügen umfasst, das auf einer unteren Fläche eines Rahmens (41) des Verbindungsmittels (40) bereitgestellt wird, wobei sich der Rahmen (41) entlang der Seitenabschnitte (92, 93) der streifenförmigen Elemente (90) erstreckt.

6. Verfahren zur Herstellung eines Bestandteils eines Reifens nach Anspruch 5, bei dem
der Positionierschritt die folgenden Schritte umfasst: einen Schritt des Drehens der Trommel (2) in Übereinstimmung mit der gemessenen Breite des streifenförmigen Elementes (90) jedes Mal dann, wenn das streifenförmige Element (90) beim Anordnungsschritt angeordnet wird; und einen Schritt des Anordnens des Seitenabschnittes (92, 93) des angeordneten streifenförmigen Elementes (90) in Übereinstimmung mit einer Position der Anordnung des Seitenabschnittes (92, 93) des nachfolgenden streifenförmigen Elementes (90) beim Anordnungsschritt.

7. Vorrichtung zur Herstellung eines Bestandteils eines Reifens nach Anspruch 5 oder 6, bei dem
der Messschritt ein Schritt des Messens der Breite ausschließlich eines Verbindungsabschnittes (92A) zwischen den beiden Seitenabschnitten (92, 93) eines jeden streifenförmigen Elementes (90) ist.

8. Vorrichtung zur Herstellung eines Bestandteils eines Reifens nach einem der Ansprüche 5 bis 7, das außerdem die folgenden Schritte aufweist:
einen Schritt für das Erhalten einer Länge eines Bestandteils eines Reifens, der auf einem äußeren Umfang einer Trommel (2) gebildet wird, in einer Umfangsrichtung der Trommel (2);
einen Vergleichsschritt zum Vergleichen der erhaltenen Länge und einer eingestellten Solllänge des Bestandteils eines Reifens;
einen Schritt des Bewirkens, dass der Bestandteil eines Reifens auf der Trommel (2) und ein Körper (4) für das Übertragen miteinander in Kontakt kommen, um die Trommel (2) und den Körper (4) für das Übertragen zu drehen, und einen Schritt des Übertragens des Bestandteils eines Reifens von der Trommel (2) auf den Körper (4) für das Übertragen; und
einen Rotationsschritt für das Drehen der Trommel (2) und des Körpers (4) für das Übertragen mit voneinander unterschiedlichen Umfangsgeschwindigkeiten der Drehung auf der Basis eines Ergebnisses eines Vergleichs der Längen des Bestandteils eines Reifens, wodurch der Bestandteil eines Reifens, der auf den Körper (4) für das Übertragen übertragen werden soll, bis zur Solllänge zum Zeitpunkt der Übertragung auf den Körper (4) für das Übertragen verformt wird.

## Revendications

1. Dispositif de fabrication d'un composant de pneumatique, pourvu d'un tambour (2) sur lequel une pluralité d'éléments en forme de bande (90) sont successivement mis en place dans un sens périphérique sous l'effet d'une rotation chaque fois que l'élément en forme de bande (90) est mis en place, et permettant de fabriquer un composant de pneumatique en raccordant les parties de bord (92, 93) des éléments en forme de bande (90) adjacents dans le sens périphérique du tambour (2), comprenant :
un moyen d'apport qui apporte l'élément en forme de bande (90), présentant une partie de raccord (92A) disposant d'une épaisseur relativement faible sur une partie de bord (92, 93), à un tambour ;
un moyen de mise en place qui met en place successivement la pluralité d'éléments en forme de bande (90) sur le tambour (2) en faisant chevaucher la partie de raccord (92A) d'une des parties de bord (92, 93) par l'autre partie de bord (92, 93) ;
un moyen de mesure (3) qui mesure une largeur séparant les deux parties de bord (92, 93) de chaque élément en forme de bande (90) ;
un moyen de commande de rotation qui fait tourner le tambour (2) en fonction d'un résultat de la mesure de la largeur fourni par le moyen de mesure (3) pour positionner les parties de bord destinées à être mises en place lors du chevauchement par le moyen de mise en place ; et
un moyen de raccord (40) qui raccorde les parties de bord (92, 93) des éléments en forme de bande (90) mis en place sur le tambour ; le moyen de raccord (40) présentant une structure (41) qui s'étend le long des parties de bord (92, 93) des éléments en forme de bande (90) et un moyen de butée (50) sur une face inférieure de la structure (41), le moyen de butée (50) venant en butée contre les parties de bord (92, 93) en chevauchement.

2. Dispositif de fabrication d'un composant de pneumatique selon la revendication 1, dans lequel
le moyen de commande de rotation fait tourner le tambour (2) conformément à la mesure d'une largeur de l'élément en forme de bande (90) chaque fois que l'élément en forme de bande (90) est mis en place par le moyen de mise en place, et met en place la partie de bord (92, 93) de l'élément en forme de bande (90) mis en place conformément à la position de mise en place de la partie de bord (92, 93) de l'élément en forme de bande (90) suivant sous l'effet du moyen de mise en place.

3. Dispositif de fabrication d'un composant de pneumatique selon la revendication 1 ou 2, dans lequel
le moyen de mesure (3) mesure la largeur en excluant une partie de raccord entre les deux parties de bord (92, 93) de chaque élément en forme de bande (90).

4. Dispositif de fabrication d'un composant de pneumatique selon l'une quelconque des revendications 1 à 3, comprenant en outre :
un corps rotatif (4) de transfert sur lequel est transféré le composant de pneumatique constitué sur une périphérie extérieure du tambour (2) ;
un moyen qui obtient une longueur du composant de pneumatique présent sur le tambour (2) dans un sens périphérique du tambour (2) ;
un moyen de comparaison qui compare la longueur du composant de pneumatique obtenue et une longueur visée préétablie du composant de pneumatique ;
un moyen de transfert qui met en contact l'un avec l'autre le composant de pneumatique présent sur le tambour (2) et le corps de transfert (4), afin de faire tourner le tambour (2) et le corps de transfert (4), et qui transfère sur le corps de transfert le composant de pneumatique précédemment présent sur le tambour (2) ; et
un moyen de réglage de la longueur qui fait tourner le tambour (2) et le corps de transfert (4) à des vitesses de rotation périphériques différentes en fonction d'un résultat de comparaison fourni par le moyen de comparaison et qui déforme le composant de pneumatique à transférer sur le corps de transfert (4) afin de lui donner la longueur visée, au moment du transfert effectué par le moyen de transfert.

5. Procédé de fabrication d'un composant de pneumatique par mise en place, successivement, d'une pluralité d'éléments en forme de bande (90) dans un sens périphérique d'un tambour (2) en faisant tourner un tambour (2) chaque fois que l'élément en forme de bande (90) est mis en place et en raccordant des parties de bord (92, 93) des éléments en forme de bande (90) adjacents, le procédé comprenant les étapes suivantes :
une étape d'apport consistant à apporter au tambour (2) l'élément en forme de bande (90), une partie de raccord (92A) qui présente une épaisseur relativement faible étant prévue sur une des parties de bord (92, 93) ;
une étape de mise en place consistant à mettre en place successivement la pluralité d'éléments en forme de bande (90) sur le tambour (2), en faisant chevaucher la partie de raccord (92A) d'une des parties de bord (92, 93) par l'autre partie de bord (92, 93) ;
une étape de mesure consistant à mesurer une largeur séparant les deux parties de bord (92, 93) de chaque élément en forme de bande (90) ;
une étape de positionnement consistant à faire tourner le tambour (2) en fonction d'un résultat de la mesure de la largeur fourni par l'étape de mesure, pour positionner les parties de bord destinées à être mises en place par chevauchement au cours de l'étape de mise en place ;
une étape de raccord consistant à raccorder les parties de bord (92, 93) des éléments en forme de bande (90) mis en place sur le tambour (2), dans lequel
l'étape de raccord comporte une étape consistant à mettre en butée des parties de bord (92, 93) en chevauchement et le moyen de butée (50) prévu sur une face inférieure d'une structure (41) du moyen de raccord (40), la structure (41) s'étendant le long des parties de bord (92, 93) des éléments en forme de bande (90).

6. Procédé de fabrication d'un composant de pneumatique selon la revendication 5, dans lequel
l'étape de positionnement comporte une étape consistant à faire tourner le tambour (2) conformément à la mesure de la largeur de l'élément en forme de bande (90) chaque fois que l'élément en forme de bande (90) est mis en place au cours de l'étape de mise en place, et consistant à mettre en place la partie de bord (92, 93) de l'élément en forme de bande (90) mis en place, conformément à une position de mise en place de la partie de bord (92, 93) de l'élément en forme de bande (90) suivant au cours de l'étape de mise en place.

7. Procédé de fabrication d'un composant de pneumatique selon la revendication 5 ou 6, dans lequel
l'étape de mesure est une étape consistant à mesurer la largeur en excluant une partie de raccord (92A) entre les deux parties de bord (92, 93) de chaque élément en forme de bande (90).

8. Procédé de fabrication d'un composant de pneumatique selon l'une quelconque des revendications 5 à 7, comprenant en outre les étapes suivantes :
une étape d'obtention consistant à obtenir une longueur du composant de pneumatique, constitué sur une périphérie extérieure d'un tambour (2) dans un sens périphérique du tambour (2) ;
une étape de comparaison consistant à comparer la longueur obtenue et une longueur visée préétablie du composant de pneumatique ;
une étape de contact consistant à mettre en contact l'un avec l'autre le composant de pneumatique présent sur le tambour (2) et un corps de transfert (4), afin de faire tourner le tambour (2) et le corps de transfert (4) et consistant à transférer sur le corps de transfert (4) le composant de pneumatique précédemment présent sur le tambour (2) ; et
une étape de rotation consistant à faire tourner le tambour (2) et le corps de transfert (4) à des vitesses de rotation périphériques différentes en fonction d'un résultat de comparaison des longueurs du composant de pneumatique, en déformant ainsi le composant de pneumatique à transférer sur le corps de transfert (4) afin de lui donner la longueur visée, au moment du transfert sur le corps de transfert (4).
